# EUROPÄISCHE PATENTSCHRIFT

(11) **EP 0 402 797 B1**
(45) Veröffentlichungstag und Bekanntmachung des Hinweises auf die Patenterteilung: **18.01.1995**
(21) Anmeldenummer: 90110921.5
(22) Anmeldetag: 09.06.1990
(51) Int. Cl.: B23K 26/00, G02B 6/28

(54) **Planarer optischer Koppler**
Planar optical coupler
Coupleur optique plat

(30) Priorität: 13.06.1989 DE 3919262
(43) Veröffentlichungstag der Anmeldung: 19.12.1990
(73) Patentinhaber: HOECHST AKTIENGESELLSCHAFT, 65926 Frankfurt am Main (DE)
(72) Erfinder: Coutandin, Jochen, Dr., D-6536 Langenlonsheim (DE); Groh, Werner, Dr., D-6302 Lich (DE); Herbrechtsmeier, Peter, Dr., D-6240 Königstein/Taunus (DE); Theis, Jürgen, Dr., D-6000 Frankfurt am Main 1 (DE)

(56) Entgegenhaltungen:
- PROCEEDINGS OF THE SPIE Bd. 840, 1987, BELLINGHAM,WASHINGTON, US Seiten 29 - 36; BOIARSKI: 'Low-cost 1x2 fibre optic couplerusing plastic fibre'
- CONFERENCE ON LASERS AND ELECTRO-OPTICS (BALTIMORE, MARYLAND) April1989, OSA, WASHINGTON DC, US Seite 210; HOHMAN ET AL: 'Excimer laser ablatedgrooves for optical fibre coupling to acrylate photopolymerizable waveguide structures'
- PATENT ABSTRACTS OF JAPAN vol. 7, no. 113 (P-197)(1258)18. Mai 1983 & JP-A-58 034 415 ( NIPPON DENSHIN DENWA KOSHA ) 28. Februar 1983
- APPLIED PHYSICS LETTERS.Bd. 41, Nr. 6, 15. September1982, NEW YORK US Seiten 576 - 578; SRINIVASAN ET AL: 'Self-developingphotoetching of poly(ethelene terephthalate) films by far-ultraviolet excimerlaser radiation'
- EUROPEAN CONFERENCE ON OPTICAL COMMUNICATION (BRIGHTON, UK, SEPT 1988) 1988,IEE, LONDON,UK Seiten 589 - 590; BOOTH ET AL: 'Waveguide properties and devicesin photopolymer'
- PATENT ABSTRACTS OF JAPAN vol. 7, no. 196 (P-219)(1341)26. August 1983 & JP-A-58 095 305 ( MATSUSHITA DENKO ) 6. Juni 1983
- PATENT ABSTRACTS OF JAPAN vol. 13, no. 214 (M-827)(3562)18. Mai 1989 & JP-A-1 031 585 ( BROTHER IND LTD ) 1. Februar 1989

## Beschreibung

Die Erfindung bezieht sich auf einen planaren optischen Koppler für Polymer-Lichtwellenleiter-Systeme.

Ein optischer Koppler ist ein optisches Bauteil, das die Lichtleistung in N Eingangsfasern auf M Ausgangsfasern verteilt. Derartige Bauteile werden in passiven Lichtwellenleiternetzen als Lichtleistungsverteiler oder -kombinierer eingesetzt. Die Aufteilung der Lichtleistung bzw. das Vereinigen der Lichtleistung von mehreren Fasern auf eine Faser geschieht im Mischbereich des Kopplers.

Man unterscheidet faseroptische und planaroptische Koppler. Im wesentlichen sind bisher 2 Methoden zur Herstellung planaroptischer Koppler für Polymer-Lichtwellenleiter-Systeme bekannt.

Es ist ein Verfahren für die Herstellung planaroptischer Komponenten für Polymer-Lichtwellenleiter bekannt, bei welchen ein Substrat über eine Mehrfachbeschichtung eine 250 »m dicke Photoresistschicht aufgebracht wird, die mittels einer Maske und UV-Licht strukturiert wird (vgl. A. Boiarski, SPIE, Bd. 840, S. 29 (1987). Die unbelichteten Bereiche ergeben nach dem Entwickeln einen im Querschnitt quadratischen Wellenleiter-Kanal, in den Polymer-Lichtwellenleiter mit einem Durchmesser von 250 »m eingelegt werden. Der Freiraum zwischen den Fasern wird anschließend mit einem geeigneten optischen Gießharz ausgefüllt.

Weiterhin ist ein optischer Koppler bekannt, der in der Weise hergestellt wird, daß die in einem transparenten Substrat herausgearbeiteten Nuten mit einem lichtdurchlässigen Material zur Ausbildung von lichtleitenden Kanälen gefüllt werden, wobei die Brechzahl dieses Materials höher ist als die des Substrates (vgl. JP 61-73109). Die technische Realisierung der Wellenleiter-Kanäle wird nicht beschrieben.

In dem Dokument EUROPEAN CONFERENCE ON OPTICAL COMMUNICATION
(BRIGHTON , UK , SEPTEMBER 1988)
1988 , IEE , LONDON , UK
Seiten 589,590 ;
BOOTH ET AL. : "Waveguide properties and devices in photopolymer" wird ein weiteres Verfahren zur Herstellung eines optischen Kopplers beschrieben. Das Kopplerelement besteht aus einer 5 - 8 »m dicken Wellenleiterschicht, die durch Photopolymerisation eines Acrylatmonomers erhalten wird ,und mehreren Pufferschichten. Um das Kopplerelement mit den zu- und abgehenden Wellenleiterfasern zu verbinden, werden in die Wellenleiterschicht des Koppelerelements mit einem Excimerlaser kurze Führungskanäle für die zu- und abgehenden Wellenleiterfasern gebohrt (S. 590, Summary).

Die mit dieser Technik hergestellten Koppler haben ebenfalls den Nachteil einer sehr geringen Strukturhöhe, wodurch sie für polymeroptische Wellenleiterfasern ungeeignet sind.

In diesem Dokument werden im Unterschied zu der vorliegenden Erfidnung mit einem Excimerlaser Führungskanäle in die lichtwellenleitende Schicht eines Kopplerelements (Durchmesser 5 - 8 » (S. 589,2. Absatz)) gefräst. Die Führungskanäle befinden sich lediglich an der Verbindungsstelle zwischen dem Kopplerelement und den zu- und abgehenden Lichtwellenleitern, bei denen es sich aufgrund des geringen Durchmessers offensichtlich um Glasfasern und nicht um polymeroptische Fasern handelt. Die Lichtwellenleiterkanäle, bestehend aus einem lichtwellenleitenden Material, des Kopplerelements werden nicht durch einen Excimerlaser, sondern durch Photolithographie erhalten. Das erfindungsgemäße Verfahren stellt an die Oberflächenrauhigkeit der Kunststoffkanäle, bedingt durch die verschiedene Herstellung und die völlig andere Dimension des Kanaldurchmessers (≧ 1 mm), viel höhere Anforderungen zur Vermeidung optischer Verluste als der Stand der Technik

Schließlich ist auch bekannt, mit einem Excimer-Laser Kunststoffe zu bearbeiten (vgl. R. Srinivasan et al., Appl. Phys. Letters, 41 (b) S. 576 (1982)).

Es wurde nun gefunden, daß sich planare optische Koppler mit Wellenleiter-Kanälen mit geringen Oberflächenrauhigkeiten und hohen Maßgenauigkeiten bereitstellen lassen, dadurch daß die Wellenleiter-Kanäle mit einem Excimer-Laser in die Kunststoffplatte des Kopplers gefräst werden.

Dazu wird eine Platte aus einem transparenten Kunststoff zum Anlegen von Kanälen auf einen in x-, bzw. y-Richtung beweglichen Schiebetisch befestigt. Die Platte wird mit einem in z-Richtung verlaufenden fokussierenden Excimer-Laserstrahl bestrahlt. Der Schiebetisch wird so bewegt, daß in der transparenten Platte die Kanäle für die gewünschte Wellenleiter-Struktur eingefräst werden. Eine andere Möglichkeit besteht darin, durch eine Metallmaske mit der gewünschten Struktur hindurch die Kunststoffplatte zu beleuchten. Dabei kann man 2 Verfahren verwenden: erstens einen stark aufgeweiteten Laserstrahl, der die gesamte Maske ausleuchtet, oder zweitens einen spaltförmigen Laserstrahl, der in der Breite die Maske abdeckt, aber über die Länge der Maske mit Hilfe eines beweglichen Spiegels fortbewegt wird.

Die Kunststoffplatte besteht aus einem transparenten Material, wie z.B. PMMA, PS, Polymethylpenten, PET oder PC. Die Plattendicke beträgt 1 bis 20 mm, vorzugsweise 1 bis 10 mm. Die Länge und Breite der Platte liegen je nach herzustellendem Kopplertyp im Bereich von 5 bis 200 mm, vorzugsweise 80 bis 120 mm. Zur Ablation verwendet man als Excimer-Lasergasfüllung für PMMA und Polymethylpenten vorzugsweise ArF (Laserwellenlänge λ = 193 nm) und für PC, PET und PS vorzugsweise KrF (Wellenlänge λ = 248 nm).

Nachdem nun unter Verwendung eines Excimer-Lasers Wellenleiter-Kanäle in die transparente Kunststoffplatte gefräst wurden, können in die Kanäle Polymer-Lichtwellenleiter gelegt und der Freiraum zwischen den Faserenden mit einem transparenten Gießharz ausgefüllt werden.

Wirtschaftlicher ist es, die strukturierte Kunststoffplatte galvanisch mit einem Metall zu überziehen und die entstandene Metallstruktur als Formeinsatz für ein Spritzguß-Werkzeug zur Massenfertigung zu verwenden.

Die Vorteile des erfindungsgemäßen Kopplers im Vergleich zu den bekannten Kopplern liegen einerseits in der höheren Maßgenauigkeit und der geringeren Wandrauhigkeit der erhaltenen Kanäle und in der Strukturhöhe von 1 mm und mehr.

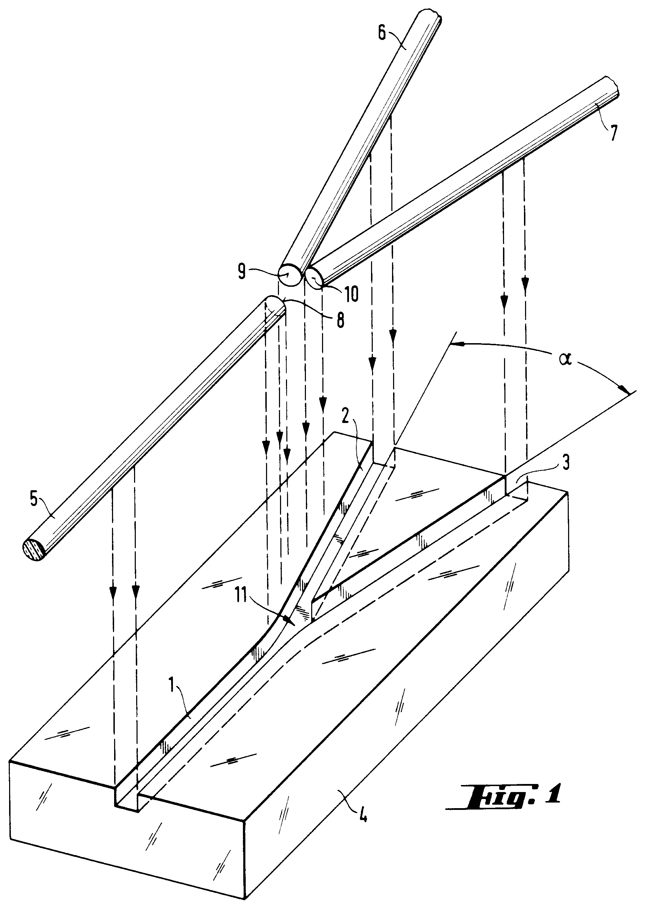

Das folgende Beispiel erläutert die Erfindung anhand Figuren 1, 2, 3, 4 und 5.

### Herstellung eines Y-Kopplers

Ein 4 mm dickes PMMA-Plättchen (4) mit einer Länge von 30 mm und einer Breite von 20 mm wurde auf einem in x- und y-Richtung beweglichen Schiebetisch befestigt. Der Tisch wurde durch einen Computer gesteuert, in dem die Koordinaten der y-förmigen Wellenleiter-Kanäle gespeichert waren. Der Strahl eines mit ArF betriebenen Excimer-Lasers (λ = 193 nm), der senkrecht zur Tischebene auf das Plättchen fokussiert war, fräste gemäß der angegebenen Koordinaten die das y-Profil bildenden Kanäle (1), (2) und (3) in den Kunststoff. Die Breite und Tiefe der Kanäle betrug genau 1 mm, der Winkel α des Ypsilons 20° (Fig. 1).

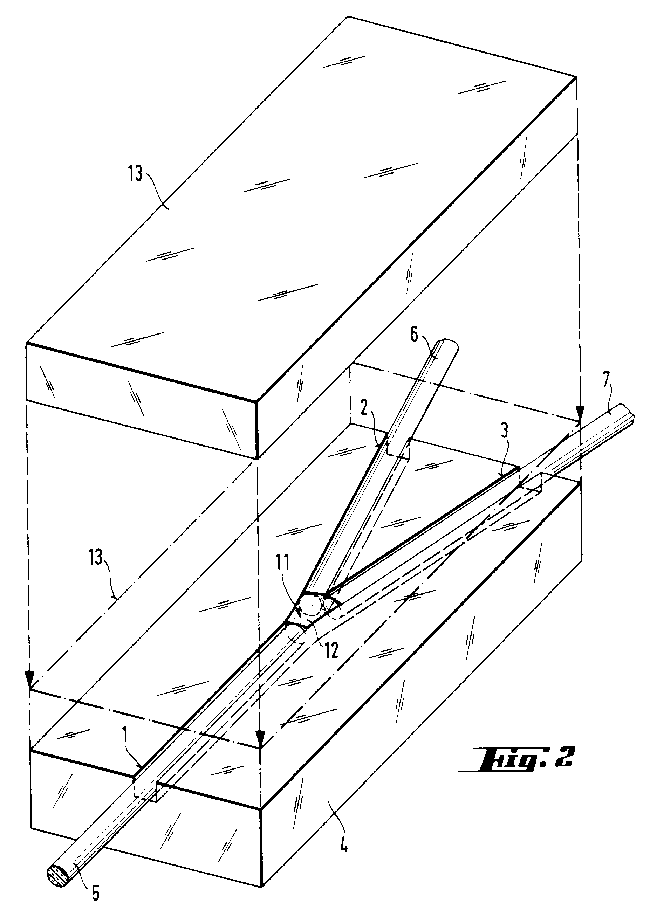

Nach Reinigung dieses Frästeils wurden Polymer-Lichtwellenleiter (5, 6, 7) mit einem Durchmesser von 1 mm, deren Enden (8, 9, 10) wegen der benötigten guten optischen Qualität mit einem Mikrotommesser vorher präpariert worden waren, in die Kanäle (1), (2) und (3) relativ nahe an die Koppelstelle (11) eingelegt (Fig. 2).

Der Freiraum zwischen den Faserstirnflächen (8, 9, 10) wurde mit einem optisch transparenten Epoxyharz (12) (EPO-TEK 301-2, n_{D} = 1,564) ausgefüllt. Der Brechungsindex des Harzes (12) wurde so gewählt, daß die Numerische Apertur (NA) des Koppelbereichs (11) mit PMMA als optischer Mantel der NA der in die Nuten (1, 2, 3) eingelegten Polymer-Lichtwellenleiter (5, 6, 7) entsprach.

Zum Schluß wurde ein PMMA-Plättchen (13) als Abdeckung auf den Koppler geklebt.
Die Einfügedämpfung mit der in Kanal (1) befindlichen Faser (5) als Eingang und den in den Kanälen (2) und (3) befindlichen Fasern als Ausgängen betrug 4,7 dB zw. 4,9 dB. Die Abweichung untereinander betrug damit nur 0,2 dB.

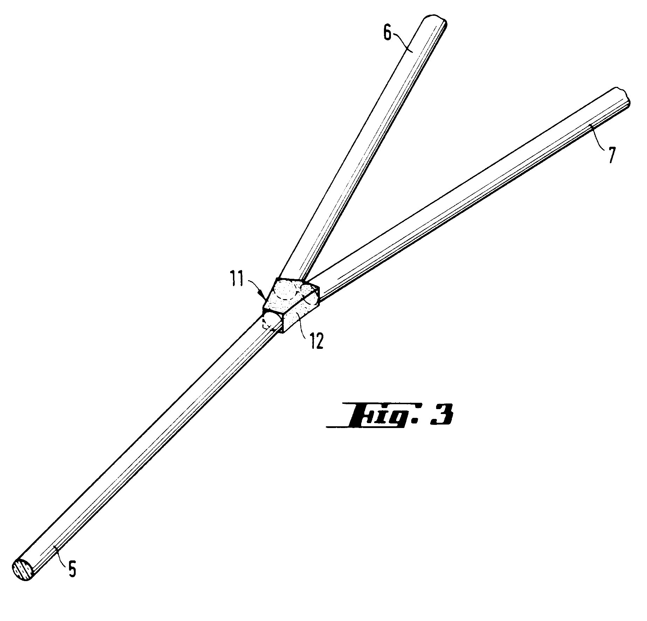

Die Fig. 3 zeigt einen Y-Koppler, welcher durch drei Lichtwellenleiter (5, 6 und 7) gebildet wird, die an der Koppelstelle (11) in der vorstehend beschriebenen Weise verbunden wurden. Die Herstellung dieses Kopplers ist beispielsweise auch in einem Spritzgießwerkzeug möglich.

### Herstellung eines asymmetrischen Kopplers

In ein 4 mm dickes PMMA-Plättchen (4) mit einer Länge von 35 mm und einer Breite von 30 mm wurde mit Hilfe eines Excimerlasers ein asymmetrisches Y-Kanalprofil gefräßt. Die hergestellten Kanäle (1, 2, 3) hatten eine Breite und Tiefe von 1 mm. Der Winkel β des asymmetrischen Ypsilon lag im Bereich von 0 bis 60° typischerweise zwischen 5 und 25°.

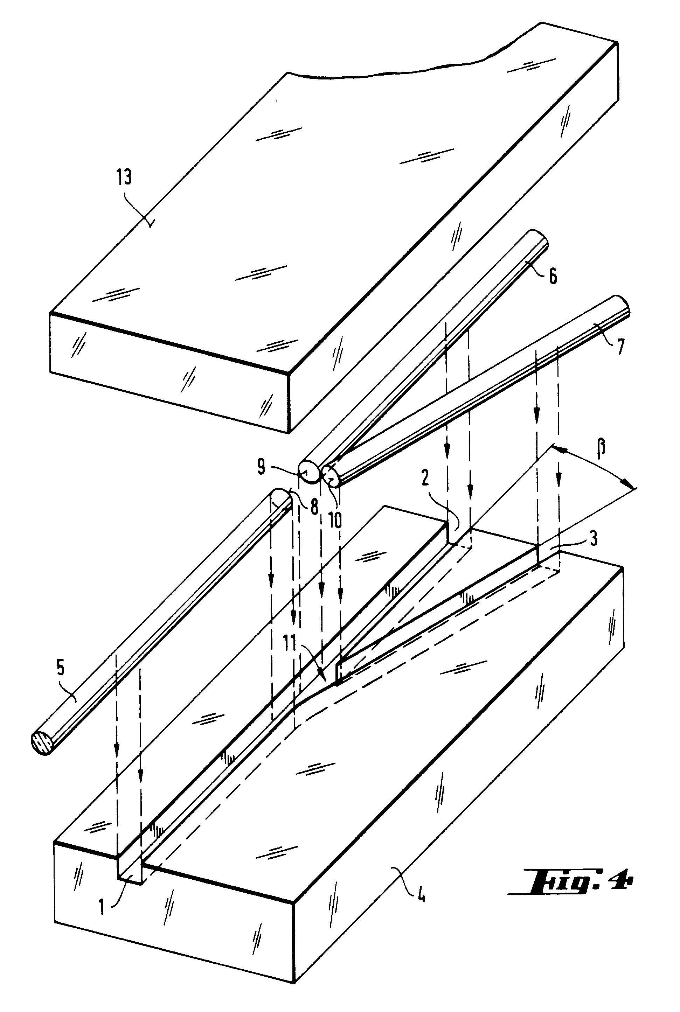

Nach Reinigung eines Frästeils wurden Polymer-Lichtwellenleiter mit einem Durchmesser von 1 mm, deren Enden mit einem Mikrotommesser geschnitten worden waren, in die Kanäle relativ nahe an die Koppelstelle eingelegt (Fig. 4). Analog zum symmetrischen Y-Koppler wurde der verbleibende Freiraum mit einem optisch transparenten Epoxyharz (EPO-TEK 301-2, n_{°} = 1,564) aufgefüllt. Als Abdeckung diente wieder ein dünnes PMMA-Plättchen (13), das auf die Kopplerplatte (4) geklebt wurde. Das Plättchen hatte eine Länge von 35 mm, eine Breite von 30 mm und eine Dicke von 2 mm.

Auf diese Weise ist es möglich, durch Variation des Winkels β ein definiertes Aufteilungsverhältnis einzustellen.

### Y-Koppler mit Faserprofil

Mit einem Excimerlaser (λ = 193 mm) wurde in zwei dicken PMMA-Plättchen (4, 13), die eine Länge von 30 mm, eine Breite von 20 mm und eine Dicke von 4 mm hatten, eine symmetrische Y-Struktur mit einem halbrunden Profil herausgefräßt. Die hergestellten Kanäle (1', 2', 3') hatten einen Radius von 1 mm.

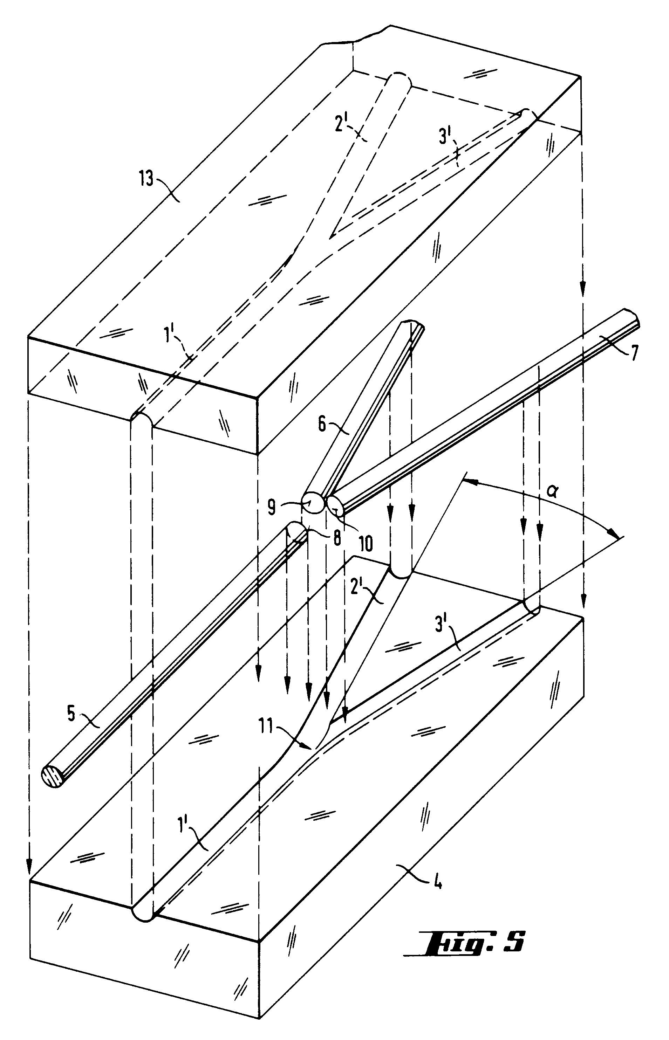

Nach Reinigung der Frästeile wurden Polymer-Lichtwellenleiter mit einem Durchmesser von 1 mm, deren Enden mit einem Mikrotommesser geschnitten worden waren, in die Kanäle eines Blocks relativ nahe an der Koppelstelle (11) eingelegt (Fig. 5). Analog zu den vorherigen Beispielen wird wieder der Zwischenraum mit einem Epoxyharz ausgefüllt. Zur Vermeidung von Blasenbildung wurde der Kleber zwischen den Fasern an Luft vorgetrocknet. Nach Einsetzen der Aushärtung wird das zweite PMMA-Plättchen (13), in dem sich ebenfalls ein Y-Profil befindet, über das erste Plättchen (4), in dem die Fasern (5, 6, 7) eingelegt wurden, gestülpt und verklebt.

Die Einfügedämpfung mit der in Kanal (1) befindlichen Faser als Eingang und den in den Kanälen (2) und (3) befindlichen Fasern als Ausgängen betrug 4.0 dB bzw. 4.2 dB. Die Abweichung untereinander betrug damit nur 0,2 dB. Die bei den vorherigen Beispielen vorhandenen Flächenverluste von 1 dB konnten durch das halbrunde Kanalprofil auf ein Minimum reduziert werden. Auch beim asymmetrischen Y-Koppler könnte die Einfügedämpfung durch ein halbrundes Randprofil um bis zu 1 dB verringert werden.

Es besteht auch die Möglichkeit, halbrunde Profile mit einer CNC-Maschine ("computer numerical-control"-Maschine) zu fräsen.

## Patentansprüche

1. Planarer optischer Koppler mit in der Oberfläche einer Platte aus einem transparenten Kunststoff (4) angelegten Kanälen (1,2,3), Polymer-Lichtwellenleitern (5, 6, 7), die in die Kanäle (1, 2,3) eingelegt sind und einem Freiraum zwischen den Lichtwellenleitern (11), der mit einem transparenten Gießharz (12) ausgefüllt ist, dadurch gekennzeichnet, daß die Kanäle (1,2,3) in einer Strukturhöhe von 1 mm und mehr durch einen Excimer-Laser ausgefräst worden sind.

2. Koppler nach Anspruch 1, dadurch gekennzeichnet, daß die Kanäle in Form eines asymmetrischen Ypsilons angeordnet sind und einen Winkel β = 0-60° bilden.

3. Koppler nach Anspruch 1, dadurch gekennzeichnet, daß die Kanäle in Form eines symmetrischen Ypsilons angeordnet sind und ein halbrundes Profil aufweisen.

## Claims

1. A planar optical coupler having channels (1, 2, 3) provided in the surface of a transparent plastic sheet (4), polymeric optical waveguides (5, 6, 7) laid in the channels (1, 2, 3) and a free space (11) between the optical waveguides which is filled up with a transparent casting resin (12), wherein the channels (1, 2, 3) have been milled out by means of an excimer laser to a structure height of 1 mm and over.

2. The coupler as claimed in claim 1, wherein the channels are arranged in the form of an asymmetrical Y and form an angle β of 0-60°.

3. The coupler as claimed in claim 1, wherein the channels are arranged in the form of a symmetrical Y and have a semicircular profile.

## Revendications

1. Connecteur optique plat comprenant des canaux (1, 2, 3) formés dans la surface d'une plaque en matière plastique transparente (4), des guides d'ondes lumineuses en polymère (5, 6, 7), qui sont loges dans les canaux (1, 2, 3), et un espace libre compris entre les guides d'ondes lumineuses (11) qui est comblé d'une résine de coulée transparente (12), caractérisé en ce que les canaux (1, 2, 3) ont été fraisés par un laser excimer, avec une hauteur de structure de 1 mm ou plus.

2. Connecteur selon la revendication 1, caractérisé en ce que les canaux sont disposés pour former un Y asymétrique et forment un angle β = 0 à 60°.

3. Connecteur selon la revendication 1, caractérisé en ce que les canaux sont disposés dans la forme d'un Y symétrique et présentent un profil semi-circulaire.
